# EUROPÄISCHE PATENTSCHRIFT

(11) **EP 2 555 277 B1**
(45) Veröffentlichungstag und Bekanntmachung des Hinweises auf die Patenterteilung: **25.12.2013**
(21) Anmeldenummer: 12004685.9
(22) Anmeldetag: 22.06.2012
(51) Int. Cl.: B65D 6/30, B65D 6/34, B60K 11/00, B62D 21/15, B62D 21/17, B60L 11/18, B62D 25/20, H01M 2/10, H01M 10/50

(54) **Batterierahmen**
Battery frame
Grilles de batteries

(30) Priorität: 30.07.2011 DE 102011109001
(43) Veröffentlichungstag der Anmeldung: 06.02.2013
(73) Patentinhaber: GEDIA Gebrüder Dingerkus GmbH, 57439 Attendorn (DE)
(72) Erfinder: Böhmer, Andreas, 57368 Lennestadt (DE); Strautz, Josef, 57439 Attendorn (DE)
(74) Vertreter: Köchling, Conrad-Joachim

(56) Entgegenhaltungen:
- EP-A1- 1 753 069
- DE-A1-102005 016 975
- DE-A1-102008 029 200
- US-A- 5 833 023
- US-A- 6 085 854

## Beschreibung

Die Erfindung betrifft Batterieträger für Elektro- und Hybridfahrzeuge, gemäß Oberbegriff des Anspruches 1.

Momentan ist die Automobilindustrie dabei, vorhandene Fahrzeugserien oder Fahrzeugprogramme von reinen Verbrennungsmotoren auf elektrischen Antrieb oder eine Kombination aus Verbrennungs-und Elektromotor als Hybridfahrzeug umzurüsten. Die elektrische Speisung der Elektromotoren erfolgt dabei durch wieder aufladbare Akkus, welche innerhalb des Fahrzeuges anzuordnen sind.

Die benötigten Akkus dieser Fahrzeuge unterliegen dabei erhöhten Schutzanforderungen im Falle des Fahrzeugcrashs. Diese können durch das bestehende Design der Fahrzeuge nicht komplett erfüllt werden. Das Einbringen crash- relevanter Strukturen in ein bestehendes Fahrzeug ist aufgrund fehlenden Bauraums nur schwer oder gar nicht möglich.

Hierzu ist schon vorgeschlagen worden, den Rahmen aus Hohlprofilen zu fertigen, die Deformationszonen zur Aufnahme von crashbedingten Belastungen bilden.

Bei den herkömmlichen, mit Akkumulatoren bestückten Batterieträgern besteht ein Problem darin, die beim Betrieb der Akkumulatoren entstehende Wärme abzuführen.

Aus der US 5 833 023 A ist ein Batterieträger gattungsgemäßer Art bekannt, der dazu geeignet und bestimmt ist, die Kühlung oder Belüftung von Akkumulatoren zu ermöglichen, indem Kühlluft durch die Profile geleitet wird.

Ausgehend von diesem Stand der Technik liegt der Erfindung die Aufgabe zugrunde, zu- und abführende Leitungen der Akkumulatoren sicher und geordnet am Batterieträger anzuordnen.

Zur Lösung dieser Aufgabe wird vorgeschlagen, dass das Hohlprofil oder jeder Hohlprofilabschnitt eine einen Hohlraum umschließende Struktur zur Crash-Absorption als eine erste Zone und einen von der dieser Struktur abragenden Bereich, beispielsweise in Form einer Lasche, als zweite Zone aufweist, wobei an dem abragenden Bereich ein Halter zur Aufnahme und Halterung von zu- und abführenden Leitungen, wie beispielsweise den elektrischen Leitungen der Akkumulatoren ausgebildet oder angeordnet ist.

Weiter kann insbesondere besonders bevorzugt vorgesehen sein, dass das Hohlprofil oder das Hohlprofilteilstück aus einem Crashprofil mit zwei voneinander beabstandeten, mittels einer Lasche oder eines Steges miteinander verbundenen, geschlossenen, jeweils einen Hohlraum umschließenden Strukturen zur Crash-Absorption besteht, wobei die Strukturen jeweils an einer gegenüberliegenden Seitenrandkante der Lasche oder des Steges angeordnet und mit dieser oder diesen verbunden oder einstückig ausgebildet sind und eine erste Zone bilden, wobei die die beiden Strukturen verbindende Lasche oder der Steg eine zweite Zone bildet und Haltemittel beispielsweise zur Aufnahme und Halterung von zu- und abführenden Leitungen, wie beispielsweise den elektrischen Leitungen der Akkumulatoren aufweist.

Ein derartiges Profil kann zum einen durch seine zwei voneinander unabhängigen, jeweils einen Hohlraum umschließenden Strukturen besonders hohe Crash- Kräfte absorbieren, und zum anderen in dem zwischen den geschlossenen Strukturen angeordneten Bereich weitere Funktionen wie beispielsweise die Halterung und Führung der zu-und abführenden elektrischen Leitungen der Akkumulatoren ermöglichen. Somit sind auch die zu- und abführenden Leitungen zu den Akkumulatoren sicher und geordnet innerhalb des Batterieträgers angeordnet und können an beliebiger Stelle des Batterieträgers aus diesem heraus zu entsprechenden Anschlüssen innerhalb des Fahrzeuges geführt werden.

Darüber hinaus kann besonders bevorzugt vorgesehen sein, dass das Hohlprofil oder der Hohlprofilabschnitt einen etwa U-förmigen Querschnitt aufweist, wobei die Lasche oder der Steg die Basis der U-Form bildet und die Schenkel der U-Form durch im Querschnitt jeweils eine etwa quadratische oder rechteckige Form aufweisende, geschlossene, jeweils einen Hohlraum umschließende Struktur gebildet sind.

Eine derartige Form des Hohlprofils hat sich als besonders crash- sicher und praktikabel insbesondere zur Verlegung von elektrischen Leitungen und anderen Zu- und Ableitungen zu den Akkumulatoren zwischen den einen Hohlraum umschließenden Strukturen erwiesen.

Zudem kann besonders bevorzugt vorgesehen sein, dass an der ersten und / oder an der zweiten geschlossenen, jeweils einen Hohlraum umschließenden Struktur Mittel zu Befestigung des Akkumulators oder mehrerer Akkumulatoren an der den Hohlraum umschließenden angeordnet oder ausgebildet sind.

Dabei kann besonders bevorzugt vorgesehen sein, dass das Mittel zur Befestigung aus mindestens einer in den Hohlraum der Struktur hineinragenden Gewindemuffe besteht.

Hierdurch können auf einfache Art und Weise die durch ein Hohlprofil oder einen Hohlprofilabschnitt gebildeten Rahmenteile mit den Akkumulatoren verbunden, beispielsweise mittels Verschraubung, werden. Auch ist hierdurch ein späteres Lösen beispielsweise zum Austausch einzelner Teile und anschließendes Wiederbefestigen auf schnelle und einfache Art und Weise ermöglicht.

Auch kann der Rahmen hierdurch mit Fahrzeugteilen verschraubt sein und somit auf schnelle und einfache Art und Weise durch Lösen der Schraubverbindung im Bedarfsfall vom Fahrzeug entfernt werden.

Auch kann besonders bevorzugt vorgesehen sein, dass das Mittel zur Belüftung durch einen in den Hohlraum der Struktur hineinragenden oder von der den Hohlraum umschließenden Struktur nach außen abragenden muffen- oder rohrartigen Steckverbinder für einen Belüftungsschlauch gebildet ist.

Durch ein derartiges Mittel kann der Hohlraum innerhalb des Profils zur Kühlung oder Belüftung des Akkumulators benutzt werden. Die an den Akkumulatoren angeschlossenen Belüftungs- oder Entlüftungsmittel, die zum Beispiel durch Schläuche oder dergleichen gebildet sind, können auf schnelle und einfache Art und Weise mit den Steckverbindern verbunden werden, so dass der jeweilige Hohlraum zur Be- oder Entlüftung dient. In einem derartigen Be- oder Entlüftungssystem kann an geeigneter Stelle auch ein Mittel zum Einblasen und/oder zur Absaugung von Luft und/oder Einbringung von Kühlungsluft angeordnet sein.

Weiter kann besonders bevorzugt vorgesehen sein, dass mindestens eine Wandung des Hohlprofils oder Hohlprofilabschnittes, die den vom Rahmen umschlossenen Akkumulatoren zugewandt oder abgewandt ist, eine Längsprofilierung als Versteifung aufweist.

Dabei kann besonders bevorzugt vorgesehen sein, dass die Längsprofilierung als etwa u-förmige in die Wandung eingeformte Längssicke ausgebildet ist.

Die Anordnung einer derartigen Längssicke zur Versteifung dient als zusätzliche Erhöhung der Stabilität des gesamten Rahmens und erhöht dabei die Aufnahme von Kräften im Crashfall.

Darüber hinaus kann besonders bevorzugt vorgesehen sein, dass der Rahmen eine quadratische oder eine rechteckige Form mit beliebiger, an die Gesamtlänge umrahmter Akkumulatoren angepasster Seitenlänge aufweist.

Der Rahmen ist durch seine beliebige Seitenlänge an die jeweilige Länge der zu umrahmenden Akkumulatoren auf schnelle und einfache Weise anpassbar, so dass nahezu beliebige Länge und Breite von Akkumulatoren auf schnelle und einfache Art und Weise umrahmt werden können.

Auch kann besonders bevorzugt vorgesehen sein, dass die Hohlprofile oder Hohlprofilabschnitte aus Leichtmetall, insbesondere aus Aluminium, bestehen.

Die Verwendung von Aluminium ermöglicht zum einen ein besonders geringes Gewicht des Rahmens und weist dabei eine hohe Lebensdauer auf.

Besonders bevorzugt ist zudem, dass das Hohlprofil oder die Hohlprofilabschnitte außenliegend und/oder innenliegend im von Kühlfluid durchströmbaren Hohlraum Kühllamellen oder dergleichen Kühlstrukturen aufweisen, die durch mit dem Hohlprofil (2) verbundene oder einstückig ausgebildete Teile gebildet sind.

Hierdurch wird das Hohlprofil vorzugsweise durch entsprechende Profilierung oder auch durch Anbauteile mit Kühlflächen, Kühlstegen, Kühllamellen oder anderen die Kühlung durch durchströmendes Fluid fördernden Strukturen versehen, so dass ohne wesentlichen Kostenaufwand eine hohe Kühlleistung erreicht wird.

Ein derartiges Profil aus Aluminium ist beispielsweise durch Rollprofilieren, Strangpressen, Kanten oder Pressen auf kostengünstige Art und Weise einfach herstellbar.

Ein Ausführungsbeispiel der Erfindung ist in den Figuren dargestellt und im Folgenden näher beschrieben.

Es zeigt:
- Figur 1: einen Querschnitt eines ersten erfindungsgemäßen Profils;
- Figur 2: desgleichen mit zusätzlichen Steckverbindern zur Belüftung;
- Figur 3: desgleichen aus Figur 1 mit einer Halteeinrichtung für elektrische Leitungen;
- Figur 4: desgleichen aus Figur 1 mit Einer Gewindemuffe zur Befestigung des Rahmens am Fahrzeug oder der Akkumulatoren am Rahmen;

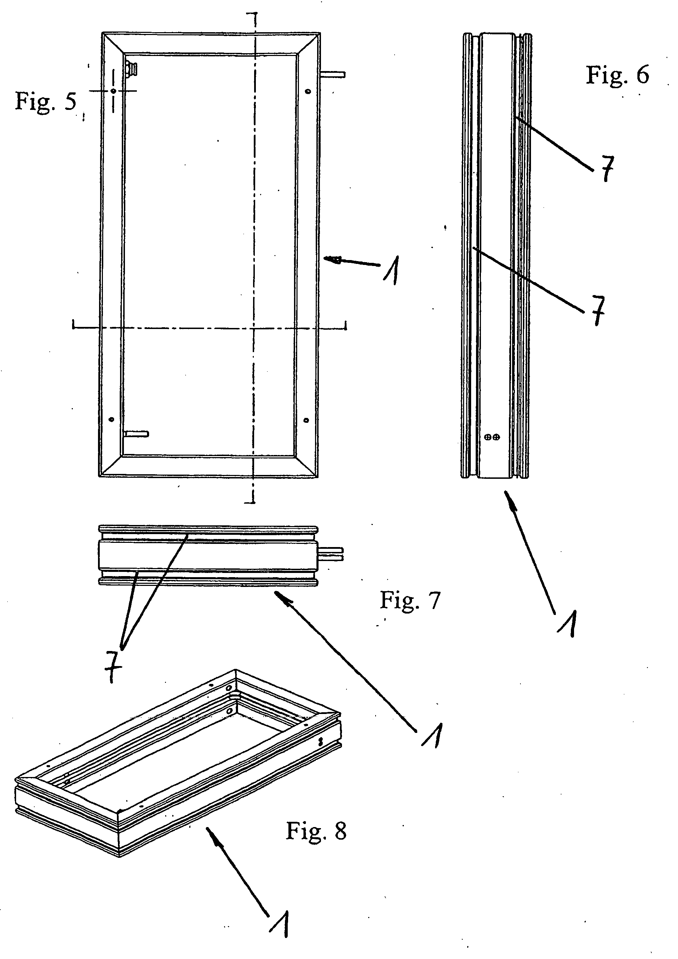

- Figur 5: einen erfindungsgemäßen Rahmen in Draufsicht;
- Figur 6: desgleichen in Seitenansicht;
- Figur 7: desgleichen von einer Querseite gesehen;
- Figur 8: desgleichen in isometrischer Ansicht.

In den Figuren ist ein Batterieträger für Elektro- oder Hybridfahrzeuge gezeigt. Der Batterieträger besteht zumindest aus einem Rahmen 1 zur lagesicheren Aufnahme und transportsicheren Halterung eines wieder aufladbaren Akkumulators oder mehrerer wieder aufladbaren Akkumulatoren. Die Akkumulatoren sind innerhalb eines Fahrzeuges angeordnet. Der Rahmen 1 umgreift dabei die Akkumulatoren vollumfänglich und weist erste Befestigungsmittel zur Befestigung der Akkumulatoren am Rahmen 1 und zweite Befestigungsmittel zur Befestigung des Rahmens 1 an Fahrzeugteilen auf.

Im Ausführungsbeispiel besteht der Rahmen 1 aus einem Hohlprofil 2 oder mehreren den Rahmen 1 bildenden Hohlprofilabschnitten. Die Hohlprofilabschnitte oder das Hohlprofil 2 weisen mindestens eine Deformationszone auf um kräftebedingte Belastungen mindestens teilweise zu absorbieren.

In einem ersten in den Figuren nicht gezeigten , möglichen Ausführungsbeispiel weist das Hohlprofil 2 oder jeder Hohlprofilabschnitt eine einen Hohlraum 3 umschließende Struktur zur Crash- Absorption als eine erste Zone und einen von dieser Struktur abragenden Bereich, beispielsweise in Form einer Lasche 6, als zweite Zone auf. Dabei kann an dem abragenden Bereich ein Halter zur Aufnahme und Halterung von zu- und abführenden Leitungen, wie beispielsweise den elektrischen Leitungen 5 der Akkumulatoren ausgebildet oder angeordnet sein.

Bei einem zweiten, in den Figuren gezeigten Ausführungsbeispiel besteht eine erste Zone des Hohlprofils 2 oder Hohlprofilteilstückes aus einem Crashprofil mit zwei voneinander beabstandeten, mittels einer Lasche 6 verbundenen, geschlossenen, jeweils einen Hohlraum 3 umschließenden Strukturen zur Crash-Absorption. Die Strukturen sind dabei jeweils an einer gegenüberliegenden Seitenrandkante der Lasche 6 angeordnet und mit dieser verbunden. Die die beiden Strukturen verbindende Lasche 6 bildet hierbei den Boden einer Ausnehmung die seitlich von den Kammern des Hohlprofils 2 begrenzt ist. An den der Ausnehmung zugewandten Wandteilen des Hohlprofils 2 sind Haltemittel 4 angeordnet, die beispielsweise zur Aufnahme und Halterung von zu-und abführenden Leitungen, wie beispielsweise den elektrischen Leitungen 5 der Akkumulatoren dienen.

Ein derartiger Batterieträger ermöglicht eine besonders hohe Aufnahme von Crash- Kräften durch die Anordnung zweier voneinander beabstandeter, miteinander verbundener Hohlprofile 2 mit Hohlräumen 3 zur Crash- Absorption.

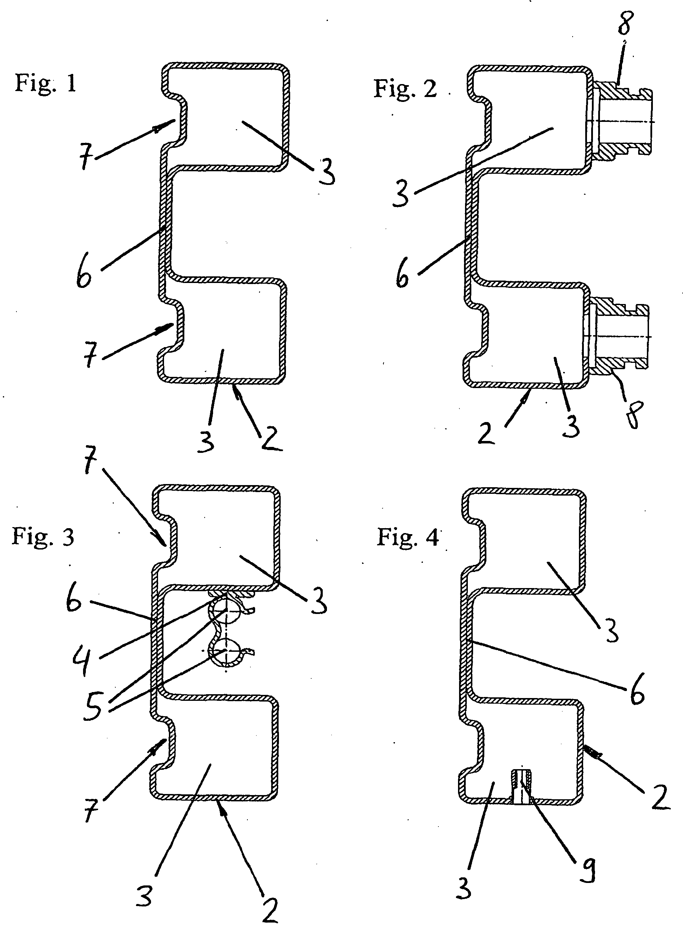

Wie insbesondere aus den Figuren 1 bis 4 ersichtlich weist das Hohlprofil 2 insgesamt einen etwa U- förmigen Querschnitt auf, wobei die Lasche 6 die Basis der U- Form bildet und die Schenkel der U- Form durch jeweils eine etwa quadratische Form aufweisende, geschlossene, jeweils einen Hohlraum 3 umschließende Struktur gebildet sind.

Dabei können an der ersten und/oder an der zweiten geschlossenen, jeweils einen Hohlraum 3 umschließenden Struktur Mittel zur Befestigung des Akkumulators oder mehrerer Akkumulatoren an der den Hohlraum 3 umschließenden Struktur angeordnet oder ausgebildet sein. Zudem können Mittel zur Belüftung oder Entlüftung des Akkumulators oder der Akkumulatoren an der den Hohlraum 3 umschließenden Struktur angeordnet oder ausgebildet sein.

Die Mittel zur Befestigung können dabei auch insbesondere durch eine in den Hohlraum 3 der Struktur hineinragende Gewindemuffe 9, wie insbesondere aus Figur 4 ersichtlich, bestehen. An einer derartigen Gewindemuffe 9 kann entweder der Rahmen 1 am Fahrzeug oder an Fahrzeugteilen befestigt werden, oder eine Halterung für Akkumulatoren am Rahmen 1 befestigt sein.

Wie insbesondere aus Figur 2 ersichtlich kann das Mittel zur Belüftung durch von der den Hohlraum 3 umschließenden Struktur nach außen abragende muffenartigen oder rohrartigen Steckverbinder 8 für einen Belüftungsschlauch bestehen. Alternativ kann das Mittel zur Belüftung auch durch einen in den Hohlraum 3 der Struktur hineinragenden Steckverbinder gebildet sein.

Hierdurch ist auf einfache und schnelle Art und Weise der Rahmen mit entsprechenden Mitteln zur Be- oder Entlüftung der Akkumulatoren verbindbar, so dass die Hohlräume 3 des Profils zur Be- und Entlüftung und vor allem zur Kühlung der Akkumulatoren genutzt werden können. Kühlfluid kann durch die Hohlräume 3 strömen und überschüssige Wärme abtransportieren.

Zur weiteren Erhöhung der Steifigkeit des Rahmens 1 ist mindestens eine Wandung des Hohlprofils 2 oder Hohlprofilabschnittes, die den vom Rahmen 1 umschlossenen Akkumulatoren zugewandt oder abgewandt ist, mit einer Längsprofilierung versehen. Die Längsprofilierung ist im Ausführungsbeispiel durch eine etwa U- förmige in die Wandung eingeformte Längssicke 7 ausgebildet.

Der Rahmen 1 kann eine quadratische oder rechteckige Form mit beliebiger, an die Gesamtlänge und -breite umrahmter Akkumulatoren angepasster Seitenlänge aufweisen. Somit ist ein derartiger Rahmen 1 für nahezu jede Seitenlänge von zu umrahmenden Akkumulatoren geeignet.

Die Hohlprofile 2 bestehen im Ausführungsbeispiel aus Aluminium, wodurch der Rahmen 1 nur geringes Gewicht aufweist und kostengünstig und einfach bei einer hohen Lebensdauer herstellbar ist.

Durch die Erfindung wird bei einer crashsicheren Anordnung der Akkumulatoren innerhalb bestehender Fahrzeugprogramme und -strukturen es ermöglicht, dass der Batterierahmen weitere Funktionen wie insbesondere Kühlung, oder auch die Aufnahme und Halterung beispielsweise elektrischer Leitungen erfüllt und dabei kostengünstig und einfach herstellbar ist.

Die Erfindung ist nicht auf die Ausführungsbeispiele beschränkt, sondern im Rahmen der Offenbarung vielfach variabel.

## Patentansprüche

1. Batterieträger für Elektro- und Hybridfahrzeuge, zumindest bestehend aus einem Rahmen (1) zur lagesicheren Aufnahme und transportsicheren Halterung eines wieder aufladbaren Akkumulators oder mehrerer wieder aufladbaren Akkumulatoren, der oder die innerhalb des Umrisses eines Fahrzeugs angeordnet sind, wobei der Rahmen (1) den oder die Akkumulatoren vollumfänglich oder zumindest teilumfänglich umfasst und erste Befestigungsmittel zur Befestigung der Akkumulatoren am Rahmen (1) und zweite Befestigungsmittel zur Befestigung des Rahmens (1) an Fahrzeugteilen aufweist, und wobei der Rahmen (1) aus einem Hohlprofil (2) oder mehreren den Rahmen (1) bildenden Hohlprofilabschnitten besteht, welches oder welche mindestens eine Deformationszone aufweist oder aufweisen, um crashbedingte Belastungen mindestens teilweise zu absorbieren, wobei mindestens eine einen Hohlraum (3) des Hohlprofils (2) oder Hohlprofilabschnitts umschließende Struktur Mittel zur Belüftung und/oder Kühlung des umfassten Akkumulators oder der umfassten Akkumulatoren aufweist und/oder an Belüftungs-und/oder Kühlmittel anschließbar ist, so dass der Hohlraum (3) von einem Kühlfluid einer Belüftung und/oder Kühlung durchströmbar ist, **dadurch gekennzeichnet, dass** das Hohlprofil oder jeder Hohlprofilabschnitt eine einen Hohlraum (3) umschließende Struktur zur Crash-Absorption als eine erste Zone und einen von dieser Struktur abragenden Bereich als zweite Zone aufweist, wobei in dem abragenden Bereich ein Halter zur Aufnahme und Halterung von zu-und abführenden Leitungen (5) der Akkumulatoren ausgebildet oder angeordnet ist.

2. Batterieträger nach Anspruch 1, **dadurch gekennzeichnet, dass** der von der Struktur abragende Bereich in Form einer Lasche (6) ausgebildet ist.

3. Batterieträger nach Anspruch 1 oder 2, **dadurch gekennzeichnet, dass** das Hohlprofil (2) oder das Hohlprofilteilstück aus einem Crashprofil mit zwei voneinander beabstandeten, mittels einer Lasche (6) oder eines Steges miteinander verbundenen, geschlossenen, jeweils einen Hohlraum (3) umschließenden Strukturen zur Crash-Absorption besteht, wobei die Strukturen jeweils an einer gegenüberliegenden Seitenrandkante der Lasche (6) oder des Steges angeordnet und mit dieser oder diesen verbunden oder einstückig ausgebildet sind und eine erste Zone bilden, wobei die die beiden Strukturen verbindende Lasche (6) oder der Steg eine zweite Zone bildet und Haltemittel (4) zur Aufnahme und Halterung von zu- und abführenden Leitungen (5) im Bereich der zweiten Zone angeordnet sind.

4. Batterieträger nach Anspruch 3, **dadurch gekennzeichnet, dass** das Hohlprofil (2) oder der Hohlprofilabschnitt einen etwa U-förmigen Querschnitt aufweist, wobei die Lasche (6) oder der Steg die Basis der U-Form bildet und die Schenkel der U-Form durch jeweils eine im Querschnitt etwa quadratische oder rechteckige Form aufweisende, geschlossene, jeweils einen Hohlraum (3) umschließende Struktur gebildet sind.

5. Batterieträger nach einem der Ansprüche 1 bis 4, **dadurch gekennzeichnet, dass** an der ersten und / oder an der zweiten geschlossenen, jeweils einen Hohlraum (3) umschließenden Struktur Mittel zu Befestigung des Akkumulators oder mehrerer Akkumulatoren an der den Hohlraum (3) umschließenden Struktur angeordnet oder ausgebildet sind.

6. Batterieträger nach Anspruch 5, **dadurch gekennzeichnet, dass** das Mittel zur Befestigung durch eine in den Hohlraum (3) der Struktur hineinragende Gewindemuffe (9) besteht.

7. Batterieträger nach einem der Ansprüche 1 bis 6, **dadurch gekennzeichnet, dass** das Mittel zur Belüftung durch einen in den Hohlraum (3) der Struktur hineinragenden oder von der den Hohlraum (3) umschließenden Struktur nach außen abragenden muffen- oder rohrartigen Steckverbinder (8) für einen Belüftungsschlauch gebildet ist.

8. Batterieträger nach einem der Ansprüche 1 bis 7, **dadurch gekennzeichnet, dass** mindestens eine Wandung des Hohlprofils (2) oder Hohlprofilabschnittes, die den vom Rahmen (1) umschlossenen Akkumulatoren zugewandt oder abgewandt ist, eine Längsprofilierung als Versteifung aufweist.

9. Batterieträger nach Anspruch 8, **dadurch gekennzeichnet, dass** die Längsprofilierung als etwa u-förmige in die Wandung eingeformte Längssicke (7) ausgebildet ist.

10. Batterieträger nach einem der Ansprüche 1 bis 9, **dadurch gekennzeichnet, dass** der Rahmen (1) eine quadratische oder eine rechteckige Form mit beliebiger, an die Gesamtlänge umrahmter Akkumulatoren angepasster Seitenlänge aufweist.

11. Batterieträger nach einem der Ansprüche 1 bis 10, **dadurch gekennzeichnet, dass** die Hohlprofile (2) oder Hohlprofilabschnitte aus Leichtmetall bestehen.

12. Batterieträger nach einem der Ansprüche 1 bis 11, **dadurch gekennzeichnet, dass** das Hohlprofil (2) oder die Hohlprofilabschnitte außenliegend und/oder innenliegend im von Kühlfluid durchströmbaren Hohlraum Kühllamellen oder dergleichen Kühlstrukturen aufweisen, die durch mit dem Hohlprofil (2) verbundene oder einstückig ausgebildete Teile gebildet sind.

## Claims

1. A battery frame for electric and hybrid vehicles, at least comprising a frame (1) for receiving securely in position and holding securely in transport a rechargeable accumulator or a plurality of rechargeable accumulators that is or are disposed within the outline of a vehicle, the frame (1) completely or at least partially enclosing the accumulator or the accumulators and being provided with first attachment means for attaching the accumulators on the frame (1) and second attachment means for attaching the frame (1) on parts of the vehicle, and the frame (1) consisting of a hollow profile (2) or of a plurality of hollow profile sections forming the frame (1), which has or have at least one deformation zone, in order to at least partially absorb crash-induced loads, at least one structure enclosing a cavity (3) of the hollow profile (2) or hollow profile section being equipped with means for ventilation and/or cooling of the comprised accumulator or of the comprised accumulators and/or being connectable to ventilation and/or cooling means, so that a cooling fluid of a ventilation and/or cooling system can flow through the cavity (3), **characterized in that** the hollow profile or each hollow profile section comprises a structure enclosing a cavity (3) for crash absorption as a first zone and a portion projecting from this structure as a second zone, in the projecting portion a holder for receiving and holding incoming and outgoing cables (5) of the accumulators being formed or arranged.

2. The battery frame according to claim 1, **characterized in that** the portion projecting from the structure is configured in the form of a tab (6).

3. The battery frame according to claim 1 or 2, **characterized in that** the hollow profile (2) or the hollow profile section consists of a crash profile with two spaced-apart structures for crash absorption interconnected by means of a tab (6) or of a web, said structures being closed and enclosing one cavity (3) each, said structures being respectively arranged at an opposite side edge of the tab (6) or of the web, and being connected thereto or being integrally formed therewith, and forming a first zone, the tab (6) connecting the two structures or the web forming a second zone, and holding means (4) for receiving and holding incoming and outgoing cables (5) being arranged in the region of the second zone.

4. The battery frame according to claim 3, **characterized in that** the hollow profile (2) or the hollow profile section has an approximately U-shaped cross section, the tab (6) or the web forming the base of the U-shape, and the legs of the U-shape being formed by one structure each having an approximately square or rectangular cross-section, being closed, and enclosing one cavity (3) each.

5. The battery frame according to one of claims 1 to 4, **characterized in that** at the first and/or at the second closed structure, enclosing one cavity (3) each, means for fixing the accumulator or a plurality of accumulators is or are disposed or formed at the structure enclosing the cavity (3).

6. The battery frame according to claim 5, **characterized in that** the means for fixing consists of a threaded socket (9) protruding into the cavity (3) of the structure.

7. The battery frame according to one of claims 1 to 6, **characterized in that** the means for ventilation is formed by a socket-like or tubelike connector (8) for a ventilation hose, said connector protruding into the cavity (3) of the structure or projecting outwardly from the structure enclosing the cavity (3).

8. The battery frame according to one of claims 1 to 7, **characterized in that** at least one wall of the hollow profile (2) or hollow profile section, which is turned toward the accumulators enclosed by the frame (1) or is turned away therefrom, has a longitudinal profiling as a reinforcement.

9. The battery frame according to claim 8, **characterized in that** the longitudinal profiling is configured as a approximately U-shaped longitudinal rib (7) formed in the wall.

10. The battery frame according to one of claims 1 to 9, **characterized in that** the frame (1) has a square or a rectangular shape with an arbitrary side length adapted to the overall length of the enclosed accumulators.

11. The battery frame according to one of claims 1 to 10, **characterized in that** the hollow profiles (2) or hollow profile sections are made of light metal.

12. The battery frame according to one of claims 1 to 11, **characterized in that** the hollow profile (2) or the hollow profile sections comprise on the outside and/or inside of the cavity, through which the cooling fluid can flow, cooling fins or the like cooling structures, which are formed by parts connected with the hollow profile (2) or integrally formed therewith.

## Revendications

1. Grilles de batterie pour des véhicules électriques et hybrides, au moins comprenant un cadre (1) pour recevoir en position sûre et maintenir de protection pour le transport un accumulateur rechargeable ou une pluralité d'accumulateurs rechargeables, qui est disposé ou sont disposés audedans du contour d'un véhicule, le cadre (1) complètement ou au moins partiellement comprenant l'accumulateur ou les accumulateurs et comportant des premiers moyens de fixation pour fixer les accumulateurs au cadre (1) et deuxièmes moyens de fixation pour fixer le cadre (1) à des parties du véhicule, et le cadre (1) consistant en un profil creux (2) ou en une pluralité de sections de profil creux formant le cadre (1), qui a ou ont au moins une zone de déformation, afin d'au moins partiellement absorber des charges provoquées par une collision, au moins une structure comprenant une cavité (3) du profil creux (2) ou de la section de profil creux comportant des moyens de ventilation et/ou refroidissement de l'accumulateur compris ou des accumulateurs compris et/ou pouvant être raccordée à des moyens de ventilation et/ou refroidissement, de façon qu'un fluide de refroidissement d'un système de ventilation et/ou refroidissement puit passer à travers la cavité (3), **caractérisées en ce que** le profil creux ou chaque section de profil creux comporte une structure comprenant une cavité (3) pour l'absorption d'une collision comme première zone et une partie faisant saillie de cette structure comme deuxième zone, dans la partie faisant saillie un support pour recevoir et maintenir des câbles (5) d'entrée et de sortie des accumulateurs étant formé ou disposé.

2. Grilles de batterie selon la revendication 1, **caractérisées en ce que** la partie faisant saillie de la structure est réalisée sous la forme d'une languette (6).

3. Grilles de batterie selon la revendication 1 ou 2, **caractérisées en ce que** le profil creux (2) ou la section de profil creux consiste en un profil de collision avec deux structures espacées et interconnectés au moyen d'une languette (6) ou d'une entretoise, fermées et chacune comprenant une cavité (3) pour l'absorption de collisions, lesdites structures étant respectivement disposées à un bord marginal latéral opposé de la languette (6) ou de l'entretoise et étant liées à celle-ci ou étant réalisées d'une seule pièce avec celle-ci, et formant une première zone, la languette (6) ou l'entretoise reliant les deux structures formant une deuxième zone, et des moyens de support (4) pour recevoir et maintenir des câbles (5) d'entrée et de sortie étant disposés dans la région de la deuxième zone.

4. Grilles de batterie selon la revendication 3, **caractérisées en ce que** le profil creux (2) ou la section de profil creux a une coupe environ en forme d'U, la languette (6) ou l'entretoise formant la base de la forme d'U et les jambes de la forme d'U étant formées par une structure respectivement ayant une coupe environ carrée ou rectangulaire, fermée et comprenant une cavité (3).

5. Grilles de batterie selon une des revendications 1 à 4, **caractérisées en ce qu'**à la première et/ou deuxième structure fermée, chacune comprenant une cavité (3), des moyens de fixation de l'accumulateur ou d'une pluralité d'accumulateurs à la structure comprenant la cavité (3) sont disposés ou formés.

6. Grilles de batterie selon la revendication 5, **caractérisées en ce que** le moyen de fixation consiste en une douille filetée (9) pénétrant dans la cavité (3) de la structure.

7. Grilles de batterie selon une des revendications 1 à 6, **caractérisées en ce que** le moyen de ventilation est formé par un connecteur enfichable (8) en forme de douille ou de tube pour un tuyau de ventilation, ledit connecteur enfichable pénétrant dans la cavité (3) de la structure ou faisant saillie vers l'extérieur de la structure comprenant la cavité (3).

8. Grilles de batterie selon une des revendications 1 à 7, **caractérisées en ce qu'**au moins une paroi du profil creux (2) ou de la section de profil creux, qui est tournée vers les accumulateurs compris dans le cadre (1) ou est tournée en sens opposé à ceux-ci, a un profilage longitudinal comme renforcement.

9. Grilles de batterie selon la revendication 8, **caractérisées en ce que** le profilage longitudinal est réalisé comme nervure longitudinale (7) environ en forme d'U dans la paroi.

10. Grilles de batterie selon une des revendications 1 à 9, **caractérisées en ce que** le cadre (1) a une forme carrée ou rectangulaire avec une n'importe qu'elle longueur de côté adaptée à la longueur totale des accumulateurs compris.

11. Grilles de batterie selon une des revendications 1 à 10, **caractérisées en ce que** les profils creux (2) ou les sections de profil creux sont en métal léger.

12. Grilles de batterie selon une des revendications 1 à 11, **caractérisées en ce que** le profil creux (2) ou la sections de profil creux comprennent à l'extérieur et/ou à l'intérieur de la cavité, à travers laquelle le fluide de refroidissement peut passer, des lamelles de refroidissement ou semblables structures de refroidissement, qui sont formées par des parties reliées à ou formées d'une seule pièce avec le profil creux (2).
